(19)

**Europäisches Patentamt**

**European Patent Office**

**Office européen des brevets**

(11) **EP 1 983 353 A1**

(12) **EUROPEAN PATENT APPLICATION**

(43) Date of publication:
**22.10.2008 Bulletin 2008/43**

(51) Int Cl.:
**G01S 7/02** (2006.01)   G01S 7/36 (2006.01)
G01S 13/02 (2006.01)   G01S 13/24 (2006.01)
G01S 13/90 (2006.01)

(21) Application number: **08007626.8**

(22) Date of filing: **18.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.04.2007  IT PI20070053**

(71) Applicant: **IDS Ingegneria Dei Sistemi S.p.A.**
**56122 Pisa (IT)**

(72) Inventors:
• **Coppi, Francesco**
  **52028 Terranuova Bracciolini (AR) (IT)**
• **Bernardini, Giulia**
  **56121 Pisa (IT)**
• **Bertoneri, Alessandro**
  **54100 Massa (IT)**

(74) Representative: **Celestino, Marco**
  **ABM Agenzia Brevetti & Marchi**
  **Viale G. Pisano, 31**
  **56125 Pisa (IT)**

(54) **Radar method and device with verification of presence of active services in the band of frequency**

(57)     A method and a radar system capable of avoiding the interference of a ground based radar interferometric system, with other active services working at a same predetermined frequency band, present in the surrounding area. Among the steps that perform this method, the following are provided: a stand-by status (2) where the system awaits a command from the user for starting the acquisition; a Listen Before Talk (LBT) status (3), where owing to a command of initiating the acquisition, the system before starting a transmission verification (4) the presence of other active systems in its operative band. In case other active systems are present the radar system remains in the status of Listen Before Talk (3), signalling it (5) to the user, otherwise it starts the acquisition (6). The presence of other active services is done through a threshold comparison (7); Listen While Talking status (LWT) (8), wherein contemporaneously to the transmission and acquisition of the radar data, the system continues to scan (9) the band on which it operates for testing any possible insertion of other services in the surrounding irradiated zone, always through the same threshold mechanism (7') used for Listen Before Talk. If the presence is observed of other services during this step the system interrupts immediately (10) the acquisition, signals the event to the user and returns to the status of stand-by (2) or alternatively, to the status of LBT (4). (Figure2)

**Fig.2**

EP 1 983 353 A1

## Description

Field of the invention

The present invention relates to a radar system, in particular ground based, suitable for remotely monitoring deformation of an observed scenario, for example of structures, of buildings, of bridges, or also a natural scenario, for example a landslide, a subsidence. It can use FMCW or SFCW and SAR techniques to obtain a radar image and an interferometric technique for monitoring displacements of each radar resolution cell of the observed image. The invention relates also to radar systems that use only the SFCW technique (or FMCW) combined with the interferometric technique, or the RAR technique as an alternative to the SAR technique.

Description of the prior art

Among the known radar systems, various types exist that use computing techniques such as, for example Stepped Frequency Continuous Wave (SFCW), Frequency Modulated Continuous Wave (FMCW), Synthetic Aperture Radar (SAR), Real Aperture Radar (RAR), differential interferometry.

The SFCW, or FMCW, technique consists of broadcasting a series of electromagnetic signals of long duration (Continuous Wave) at different frequencies, which are stepped or modulated (Stepped Frequency, Frequency Modulated).

In case of SFCW technique, the radar equipment transmits one waveform comprising a series of frequency tones which are distant from each other by a frequency step $\Delta f$ (Stepped Frequency). If N is the number of tones transmitted, the scanned band is equal to B=N$\Delta$f A full scanning in frequency is called Sweep, and at the end of a sweep the system starts another one, the so-called Continuous Wave.

For each scanning transmitted tone by the system, the acquired data is in a vector of complex numbers representing the response in frequency of the scenario, as determined at the N discrete frequencies. The acquired data are processed by computing an IFFT, allowing a resolution of the scenario in the radial direction (range) in resolution cells that have a size $\Delta R$. The resolution in range depends on the amplitude of the scanned band according to the following formula:

$$\Delta R = \frac{c}{2 \cdot B}$$

where c is the velocity of light. If for example the radar looks at a bridge, the SFCW technique allows a distinction of the echo of the signal coming from the different parts of the structure with a spatial resolution equal to $\Delta R$. The resolution cells are commonly called range-bin.

The SAR technique consists of a sophisticated control of the data, relative to a same scenario, acquired by a radar sensor arranged in different positions. The series of obtained data in different positions is combined with suitable techniques (Fourier trasform) as if the acquisitions were made in a same instant by an antenna of size equal to the path tracked by the radar sensor.

If the displacement of the radar sensor is linear, the SAR technique allows an angular resolution of the watched scenario with an angular pitch equal to $\Delta\theta$ in a direction orthogonal to the radial range, also-called cross-range. The size of the path travelled by the radar is called synthetic aperture. If L is the size of the synthetic aperture, the resolution in cross-range is given by the following equation:

$$\Delta\theta = \frac{\lambda}{2 \cdot L}$$

The interferometric differential technique allows a measurement of displacements, with respect to the position of the radar system, of the various zones of the scenario illuminated by the beam of the antenna. This technique consists of a comparison of the information in phase of the electromagnetic signal scattered determined in different instants.

The measurement displacement and the variation of phase are given by the following equation:

$$d = \frac{\lambda}{4\pi} \cdot (\varphi_2 - \varphi_1)$$

where $\lambda$ is the wavelength of the transmitted electromagnetic wave.

The three techniques can be also integrated to each other in a ground based radar interferometric system, so-called Ground Based In SAR.

As an alternative to the SAR technique a Real Aperture Radar (RAR) can be used, i.e. a radar adapted to resolve rotationally the scenario causing the antenna to rotate, which usually has a very directional wave diagram. In this case the angular resolution depends on the amplitude of the beam of the antenna.

The interferometric technique can be coupled also only to the SFCW technique, and the radar system that derives from it is capable of measuring displacements resolving the scenario only in the direction of range, but at the same time does not require any mechanical handling of the radar sensor.

Such systems have the drawback that if other systems are provided working in the same frequency band and in the same area, interferences can occur, changing and altering a normal operation.

## Summary of the invention

It is then a feature of the present invention to provide a method for avoiding the interference of a SFCW/FMCW radar system, in particular, ground based, with other active services working at a same predetermined frequency band and in the area around this radar system.

Another feature of the invention is to provide a method that does not allow to a SFCW ground based radar system to transmit only when other services are active and working at a same predetermined frequency band and in the surrounding area.

Another feature of the invention is to provide a method for operating a SFCW ground based radar system.

A further feature of the invention is to provide a method for avoiding interference of a SFCW/FMCW radar system, in particular, ground based, when during a transmission radar signals are detected coming from other systems working at a same predetermined frequency band and in the surrounding area.

These and other features are accomplished by a method for avoiding the interference of a ground based radar system with other active services working at a same predetermined frequency band, present in the surrounding area, characterised in that it comprises the steps of:

- preparing said radar system for a step of transmitting and receiving radar signals at a predetermined frequency band;
- imposing a stand-by step to said step of transmitting/ receiving;
- listening (LBT) possible transmitted signals by other devices in said band of frequencies measuring a received power therefrom;
- comparing said received power with a predetermined threshold value;
- in case said received power is larger than said threshold value, continuing said step of imposing a stand-by step;
- in case said received power is less than said threshold value, starting said step of transmitting/receiving.

This way, an initial waiting step is provided, or stand-by, where the system awaits a command for starting the acquisition by an user- after this starting command, before commencement of the transmitting step, the system executes a step of verification (Listen Before Talk, LTB), where the presence is verified of other active systems in its operative band. In case other active systems are present the radar system remains in the status of Listen Before Talk signalling it to the user, otherwise it starts the acquisition.

Advantageously, throughout said step of transmitting/receiving, said method provides a an additional listening step (Listen While Talking, LWT), of possible transmitted signals, said listening step being adapted to block immediately the acquisition and to return the radar system to said step of waiting when said other systems are active.

In other words, contemporaneously to the step of transmitting/receiving the radar data, the system continues to scan the band on which it works for testing any possible insertion of other services in the surrounding irradiated zone, through a control equal to that used for Listen Before Talk. If the presence is observed of other services during this step the system interrupts immediately the acquisition, signals the event to the user and returns to the status of stand-by or returns directly to the status of LBT.

In particular, said listening step (LBT) and/or said additional listening step (LWT) comprises a threshold control step, comparing the received power in the $P_R$ band with an alarm threshold indicating the presence of other active services in the surrounding irradiated zone.

In particular, a step is provided of warning the user when said listening step and/or said additional listening step detect a received power larger than said threshold.

According to another aspect of the invention the above described objects are achieved by a ground based radar interferometric system, having a central control unit connected to a transmission antenna by a transmission chain and to a receiving antenna by a receiving chain, said transmission antenna emitting a transmitted signal, said receiving antenna receiving a received signal and supplying an RF signal, said radar system being characterised in that it comprises:

- a switch mounted on the transmission chain, said switch being open by default;
- a detector of presence of other active services working on the same frequency band, said means for detecting being mounted on said receiving chain, wherein said detector is adapted to avoid the interference of a ground based radar interferometric system with other active services working at a same predetermined frequency band, present in the surrounding area.

In particular, said transmission chain comprises at least one of said elements:

- a Frequency Synthesizer, connected to said central control unit, capable of generating a synthesized signal;
- a Local Oscillator, which receives as input said synthesized signal, produces a intermediate frequency signal $f_{IF}$ through a beat with $f_{IF}$ frequency carrier;
- an IF transmission amplifier adapted to amplify said intermediate frequency signal fIF, said intermediate frequency signal $f_{IF}$ being translated into radio frequency (RF) through a beat with a $f_{RF}$ carrier generated by a STAble Local Oscillator (STALO);
- a RF Power Amplifier, adapted to amplify said signal translated into radio frequency and supplying it to said transmission antenna;

wherein said switch is connected upstream from or downstream of said RF Power Amplifier.

In particular, said receiving chain comprises at least one of said elements:

- a Low Noise Amplifier (LNA), which receives a signal detected by the receiving antenna and produces a amplified signal that is then encoded into intermediate frequency signal $f_{IF}$ through a beat with a carrier generated by a STAble Local Oscillator (STALO);
- an intermediate frequency amplifier adapted to amplify said intermediate frequency signal fIF;
- a Phase Detector adapted to demodulate coherently said intermediate frequency signal fIF, creating a I phase signal and a Q quadrature signal, said intermediate frequency signal fir being piloted by means of COHO carrier (COHerent Oscillator) with FL frequency generated by said Local Oscillator of said transmission chain;
- a A/D converter adapted to digitalize the output signal coming from said Phase Detector and to transmit it to said central control unit;

wherein said detector of presence is connected in a position selected from the group comprised of:

- between said Phase Detector and said central control unit, said detector of presence receiving from said Phase Detector said I phase signal and said Q quadrature signal;
- between said intermediate frequency amplifier $f_{IF}$ and said central control unit;
- between said receiving antenna and said central control unit.

In particular, if said detector is connected between said Phase Detector and said central control unit, said detector comprises at least one of said elements:

- a first line that receives said I phase signal and produces a first output signal;
- a second line that receives said Q quadrature signal and produces a second output signal;
- a adder circuit that receives said first and second output signals and produces a summation signal;
- a threshold comparator that compares said summation signal with a fixed reference value or warning threshold and produces an alarm signal sent to said control unit.

Alternatively, if said detector is connected between said intermediate frequency amplifier $f_{IF}$ and said central control unit or between said receiving antenna and said central control unit, said detector comprises a first line that receives respectively said intermediate frequency signal $f_{IF}$ from said intermediate frequency amplifier or said RF signal provided by said receiving antenna.

In particular, said first and/or said second line comprises at least one of said elements:

- a pass-band filter centred on said FL frequency with RWB band;
- a True Power Detector suitable to generate a signal proportional to the rms power of the output signal coming from said pass-band filter;
- a low-pass filter exiting from said True Power Detector.

In other words, if the detector is formed only by the first line, and then is connected as output to intermediate frequency amplifier $f_{IF}$ of the receiving chain or as output of the receiving antenna, the operation is similar to that of the case where the detector consists of two lines, with the difference that the pass-band filter as input to the block detector covers all the working band of the system and is not capable of distinguishing a interfering signal from the radar signal, then its operation is responsive to the absence of the radar signal, which occurs only in the Listen Before Talk step.

In particular, said pass-band filter comprises a couple of pass-band filters located at RF centred at the frequency $f_{tx}+f_L$ with RBW band, where $f_{tx}$ is the frequency of the transmitted tone given by:

$$f_{tx} = f_{RF} + n \cdot \Delta f, \quad n = 1 \cdots N$$

In particular, said transmitted signal is selected from the group comprised of:

- a signal consisting of a series of tones of duration T with variation $\Delta f$ of stepped frequency from one another, in case of radar system of the type Stepped Frequency Continous Wave;
- a signal with a carrrier having one waveform with continuous frequency variation.

In a possible embodiment, said radar interferometric system is mounted on a carriage having said transmission antenna and said receiving antenna adjacent to each other and acting along parallel directions, said carriage being slidable on a guide along a transversal direction with respect to said parallel directions.

Alternatively, said radar interferometric system is mounted on another self-propelled vehicle. In addition to a displacement by translation , it is possible to execute the interferometric scanning step by rotation.

In particular, said radar system is of the type SFCW/FMCW and to it at least one radar technique can be associated selected from the group comprised of:

- Syntethic apertures Radar (SAR);
- differential interferometry.

The SAR technique is applicable by arranging said SFCW radar system on a carriage having said transmission antenna and said receiving antenna adjacent to each other and acting along parallel directions, said carriage being slidable on a guide along a transversal direction with respect to said parallel directions.

As an alternative to the SAR technique the RAR. technique can be used, by rotating about its axis the SFCW radar system including the antennas.

Brief description of the drawings

The invention will be made clearer with the following description of an exemplary embodiment thereof, exemplifying but not limitative, with reference to the attached drawings wherein:

- Figure 1 shows an example of a radar interferometric system that uses the method according to the invention;
- Figure 2 shows a block diagram that describes the method according to the invention;
- Figure 3 shows a block diagram of a generic radar system of known type based on the Stepped Frequency Continuous Wave technique;
- Figure 4 shows a block diagram of such a radar system of figure 3 to which a detector and a switch according to the invention are mounted;
- Figure 5 shows a diagrammatical circuit of such a detector;
- Figure 6 shows a block diagram of a radar system of figure 3 where the detector is connected in different points of the circuit with respect to figure 4;
- Figure 7 shows a different exemplary embodiment of a detector according to the invention.
- Figure 8 shows a diagram that describes the effect of the beat with a $f_{RF}$ carrier generated by a STAble Local Oscillator (STALO);
- Figure 9 shows a diagram relative to the operation of a pass-band filtering equivalent to RF;
- Figure 10 shows a diagram relative to the pass-band filtering of the block detector.

Description of the referred exemplary embodiment

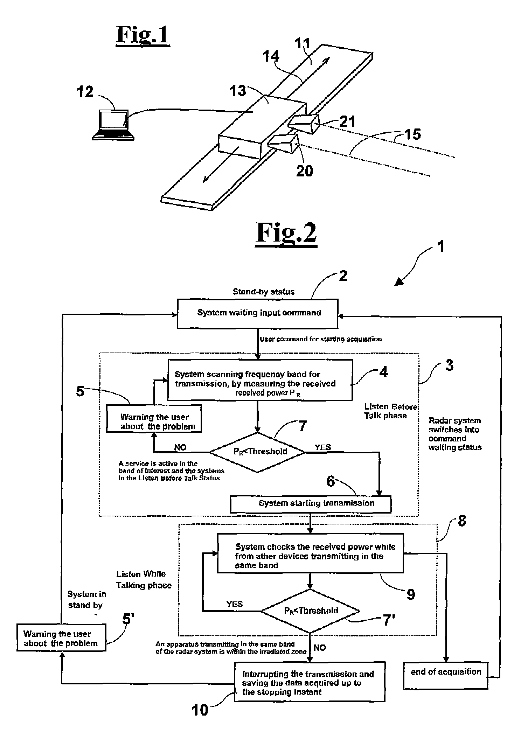

In figure 2 a block diagram is shown 1 that describes the method, according to the invention, for avoiding the interference of a ground based radar interferometric system with other active services working at a same predetermined frequency band, present in the surrounding irradiation area. Among the steps that perform this method, the following are provided:

- stand-by status 2 where the system awaits a command by the user for starting the acquisition;

- Listen Before Talk (LBT) status 3, where owing to a command of initiating the acquisition, the system before starting a transmission carries out a verification step 4 the presence of other active systems in its operative band. In case other active systems are present the radar system remains in the status of Listen Before Talk 3, signalling it (5) to the user, otherwise it starts the acquisition 6. The presence of other active services is detected through a threshold comparison 7, i.e. the received power in the band $P_R$ is compared with a threshold indicating the presence of other active services in the surrounding irradiated zone;
- Listen While Talking status (LWT) 8, where contemporaneously to the transmission and acquisition of the radar data, the system continues to scan (9) the band on which it operates for testing any possible insertion of other services in the surrounding irradiated zone, always through the same threshold mechanism 7' used for Listen Before Talk. If the presence is observed of other services during this step, then the system interrupts immediately (10) the acquisition, signalling the event to the user and returning to the status of stand-by 2 or alternatively, in the status of LBT 4.

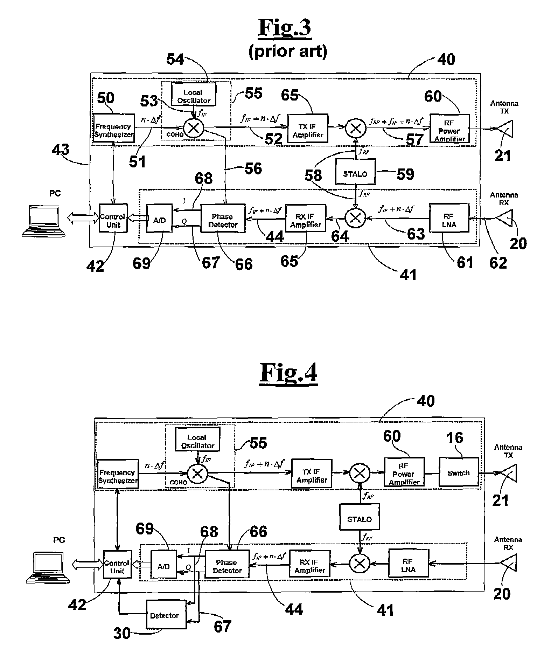

Such a method according to the invention is applicable to a generic radar system of known type, changing the controlling circuit of the exchanged signals, in particular, by adding a detector of radar signals 30, shown in figures 4, 5, 6, 7, capable of measuring the presence of signals at a same predetermined frequency band, present in the surrounding irradiation area. More in detail, such a method can be applied, for example, to a radar system of the type Ground Based In SAR (GBInSAR), integrating the Stepped Frequency Continuous Wave technique (SFCW) with the Synthetic Aperture Radar (SAR) technique to obtain a two-dimensional radar image of the watched scenario, and the Differential Interferometry for monitoring displacements of each radar resolution cell of the observed image.

Such a system, shown in figure 3, has a central control unit 42 connected to a transmission antenna 21 by a transmission chain 40 and to a receiving antenna 20 by a receiving chain 41. Furthermore, as shown in figure 1, for using the SAR technique, this radar interferometric system is mounted on a carriage 13 having said transmission antenna 21 and said receiving antenna 20 adjacent to each other and acting along parallel directions, said carriage 13 being slidable on a guide 11 along a transversal direction 14 with respect to said parallel directions 15.

In particular, a Stepped Frequency Continous Wave system is a supereterodine transceiver with single frequency conversion.

The same transmission chain 40 comprises a block "Frequency Synthesizer" 50 adapted to generate a synthesized signal 51 supplied at a series of tones of duration T with change of stepped frequency shifted Δf from one another, this synthesized signal 51 being translated into the intermediate frequency $f_{IF}$ 52 through the beat with the $f_{IF}$ frequency carrier 53, coming from a Local Oscillator 54.

The same signal is used for coherent demodulation of the received signal 56, by a COHerent Oscillator (COHO) 55. The band of the signal with IF ($BW_{IF}$) 52 corresponds to that with RF ($BW_{RF}$) 57.

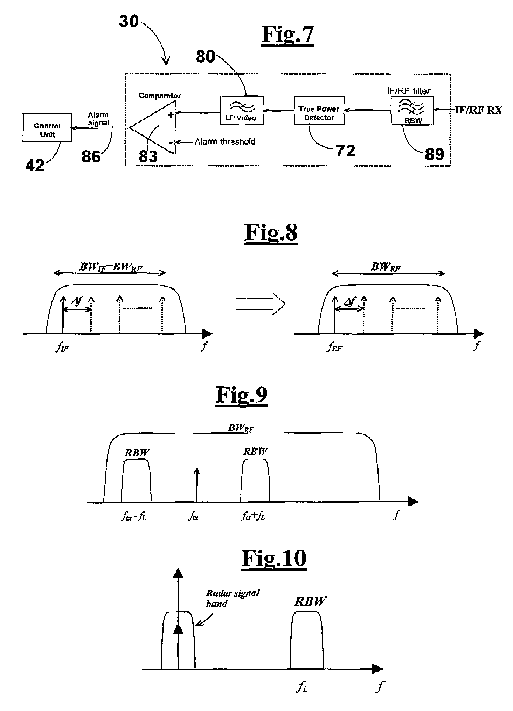

Such a process is shown in figure 8.

Then the signal 52 is amplified and translated into radio frequency (RF) 57 through the beat with a $f_{RF}$ carrier 58 generated by a STAble Local Oscillator (STALO) 59.

Finally the signal 57 is amplified by an RF Power Amplifier 60 and broadcasted through the transmission antenna 21.

The receiving chain 41, connected between the receiving antenna 20 and the control unit 42, comprises a Low Noise Amplifier (LNA) 61 that amplifies the signal 62 received by the antenna 20. The amplified signal 63 that is obtained is then encoded into intermediate frequency $f_{IF}$ 64 through the beat with carrier 58 generated by the STALO 59, connected also with the transmission chain 40.

The intermediate frequency signal $f_{IF}$ 64 is amplified by means of RX IF Amplifier 65, and demodulated coherently through the "Phase Detector" 66 piloted by the COHO carrier 56 generated by transmission chain 40. Finally the acquired data 67 and 68 is digitalized through an A/D converter 69 and transmitted to the control unit in an external PC for computation steps.

The generation of the transmission tones, the sampling of data, the conveying of data and the control of the system are operated by the control unit 42.

Similarly, the method according to the invention can be mounted on a radar having a continuous wave form (FMCW), such that the block "*Frequency Synthesizers*" 50 generates a carrier with a continuous frequency variation instead of a step variation.

Figure 4 shows the technical solution, according to the invention, to implement in the general architecture of a SFCW or FMCW transceiver for accomplishing the LBT and LWT procedure.

The changes consist of the introduction of a switch 16 (not numbered in the figure) in the transmission chain 40 (before or after the RF Power Amplifier 60) and of a system of detection 30 that has as input a portion of the signals in I phase 68 and Q quadrature 67 as output of the "Phase Detector" 66.

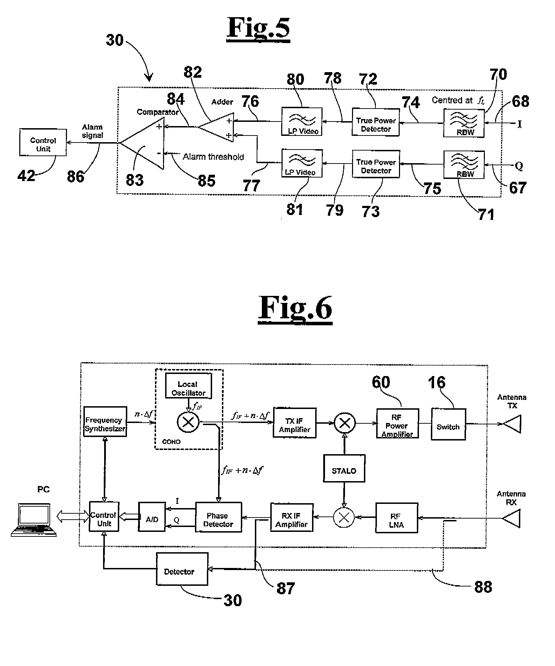

The diagrammatical circuit of the block detector 30 is shown in figure 5 and consists of:

- two pass-band filters 70 and 71 centred at the FL frequency with RBW band, two True Power Detector devices 72 and 73 capable of generating as output a signal 78, 79 proportional to the power rms of the signal at input 74, 75;

- two low-pass filters 80, 81;
- an adder circuit 82 and a threshold comparator 83 that compares the output signal to the adder 84 with a fixed reference value 85, or alarm threshold.

The output of the comparator 86 represents the alarm signal and is sent to the control unit 42 of the system.

With reference to figure 4, during the step of *Listen Before Talk* the switch 16 located at the beginning of the transmission chain 40 is closed on an adapted load thus avoiding broadcasting the SFCW signal, by the transmission antenna 21 and at the same time allowing the sensor to generate the signals necessary to the demodulation of the signal received by the receiving antenna 20. Instead, during the LWT step the switch 16 is normally closed on the antenna connector.

The pass-band filter, located as input at the block detector 30, shown in figure 5, is equivalent to a couple of pass-band filters located at RF centred at the frequency $f_{tx} \pm f_L$ with RBW band (figure 9), where $f_{tx}$ is the frequency of the transmitted tone, i.e.:

$$f_{tx} = f_{RF} + n \cdot \Delta f, \qquad n = 1 \cdots N$$

Since $f_{tx}$ scans all the transmitted bandwidth, then also the pass-band filters 70, 71 scan all the working band of the system plus an upper and lower margin equal to $f_L$, with a resolution equal to RBW.

In other words as output from the low-pass filters 80, 81 a signal is present whose power is proportional to that received in a portion of the working band.

In order that the pass-band filters 70, 71 scan all the working band continuously, the values of $f_L$ and RBW have to be chosen in such a way that:

$$f_L \le BW_{RF}$$

$$RBW \ge \Delta f$$

The power detected is not linked to the signal transmitted by the radar system, which the coherent demodulation carries in base band and centred on the zero frequency (figure 10). Clearly, the values of $f_L$ and RBW have to be chosen so that the band of the filter is not overlapped to that of the useful signal. This mechanism allows detecting the signals coming from other systems even when the radar system transmits its signal.

The True Power Detector 72, 73 of figure 5 then detects the received power in the working band coming from other systems with a resolution in frequency equal to RBW. The signal is then filtered with a low-pass filter 80, 81 for eliminating possible rapid transients, not linked to the actual presence of other signals, possible causes of false alarms.

The values of power of the signals in phase 76 and in quadrature 77 are finally summated and compared with a threshold 85. The value of the threshold associated to a RF received power value describing the presence of an active service in the surrounding irradiated zone, service that the radar system could affect.

In case the level of received power by other systems exceeds the threshold 85, an alarm signal is sent 86 to the control unit 42 that, if in a LBT step, it causes maintains the system unchanged, whereas, if in a LWT step, it interrupts immediately the transmission.

The exemplary embodiment of figure 4 can be loaded also digitally, displacing the point of the receiving chain 40 where the conversion A/D 69 of the signal is carried out at the intermediate frequency 44, in a way not shown in the figure. In this case, all the operations of filtering made through the block detector 30 of figure 5 are made with equivalent filters FIR (Finite Impulse Response) not shown, whereas the True Power Detector 72, 73, the adder 82 and the comparator 83 are implemented numerically.

Another exemplary embodiment is to provide a dedicated receiver for detecting the presence of other services. However this solution would allow only the LBT step, since the LWT step requires the connection with the transmitted signal, otherwise also the signal generated by the system same is interpreted as signal coming from another system.

A further exemplary embodiment that allows the LBT step, but not the LWT step, is shown in figure 6. It allows the LBT step, but not the LWT step, and can be obtained arranging the block detector 30 at IF 87 or RF 88.

In this case the diagrammatical circuit of the block detector 30 is that shown in figure 7. The operation is similar to that described above in figure 5, with the difference that the pass-band filter 89 as input to the block detector 30 covers all the working band of the system and is not capable of distinguishing an interfering signal from the radar signal, then its operation is responsive to the absence of the radar signal, which occurs only in the Listen Before Talk step.

The solutions as shown are applicable also to radar sensors based on the FMCW technique, where the frequency of the transmitted signal, instead of changing with a pitch $\Delta f$, changes continuously scanning all the bandwidth.

The solutions shown above can be applicable even to radar sensors with signals modulated with the Frequency Hopping technique, where the frequency of the transmitted signal changes with time in a discrete way switching from a value to another, provided the succession of frequencies transmitted scans all the working band.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for avoiding the interference of a ground based radar system with other active services working at a same predetermined frequency band, present in the surrounding area, **characterised in that** it comprises the steps of:

   - preparing said radar system for a step of transmitting and receiving radar signals at a predetermined frequency band;
   - imposing a stand-by step to said step of transmitting/receiving;
   - listening (LBT) possible transmitted signals by other devices in said band of frequencies measuring a received power therefrom;
   - comparing said received power with a predetermined threshold value;
   - in case said received power is larger than said threshold value, continuing said step of imposing a stand-by step;
   - in case said received power is less than said threshold value, starting said step of transmitting/receiving.

2. A method for avoiding the interference, according to claim 1, wherein throughout said step of transmitting/ receiving said method provides an additional listening step (LWT), of possible transmitted signals, said listening step being adapted to block immediately the acquisition and to return the radar system to said stand-by step when said other systems are active.

3. A method for avoiding the interference, according to claim 1, wherein said listening step (LBT) and/or said additional listening step (LWT) comprises a threshold control step, comparing the received power in the band $P_R$ with an alarm threshold indicating the presence of other active services in the surrounding irradiated zone.

4. A method for avoiding the interference, according to claim 1 or 3, wherein a step is provided of warning the user when said listening step and/or said additional listening step detect a received power larger than said threshold.

5. A radar device, having a central control unit connected to a transmission antenna by a transmission chain and to a receiving antenna by a receiving chain, said transmission antenna emitting a transmitted signal, said receiving antenna receiving a received signal and supplying an RF signal, said radar device being **characterised in that** it comprises:

> - a switch mounted on said transmission chain, said switch being open by default;
> - a detector of presence of other active services working on the same frequency band, said means for detecting being mounted on said receiving chain, wherein said detector is adapted to avoid the interference of said radar device with other active services working at a same predetermined frequency band, present in the surrounding area.

6. A radar device, according to claim 1, wherein said transmission chain comprises:

> - a Frequency Synthesizer, connected to said central control unit, capable of generating a synthesized signal;
> - a Local Oscillator, which receives as input said synthesized signal, produces a intermediate frequency signal $f_{IF}$ through a beat with $f_{IF}$ frequency carrier;
> - a IF transmission amplifier adapted to amplify said intermediate frequency signal fIF, said intermediate frequency signal $f_{IF}$ being translated into radio frequency (RF) through a beat with a $f_{RF}$ carrier generated by a STAble Local Oscillator (STALO);
> - a RF Power Amplifier, adapted to amplify said signal translated into radio frequency and supplying it to said transmission antenna:
>
> wherein said switch is connected upstream from or downstream of said RF Power Amplifier.

7. A radar device, according to claim 6, wherein said receiving chain comprises:

> - a Low Noise Amplifier, or Low Noise Amplifier (LNA), which receives a signal detected by the receiving antenna and produces a amplified signal that is then encoded into intermediate frequency signal $f_{IF}$ through a beat with a carrier generated by a STAble Local Oscillator (STALO);
> - a intermediate frequency amplifier adapted to amplify said intermediate frequency signal fIF;
> - a Phase Detector adapted to demodulate coherently said intermediate frequency signal fIF, creating a I phase signal and a Q quadrature signal, said intermediate frequency signal $f_{IF}$ being piloted by means of COHO carrier FL frequency generated by said Local Oscillator of said transmission chain;
> - a A/D converter adapted to digitalize the output signal coming from said Phase Detector and to transmit it to said central control unit;

wherein said detector of presence is connected in a position selected from the group comprised of:

> - between said Phase Detector and said central control unit, said detector of presence receiving from said Phase Detector said I phase signal and said Q quadrature signal;
> - between said intermediate frequency amplifier $f_{IF}$ and said central control unit;
> - between said receiving antenna and said central control unit.

8. A radar device, according to claim 7, wherein, if said detector is connected between said Phase Detector and said central control unit, said detector comprises:

> - a first line that receives said I phase signal and produces a first output signal;
> - a second line that receives said Q quadrature signal and produces a second output signal;
> - an adder circuit that receives said first and second output signals and produces a summation signal;
> - a threshold comparator that compares said summation signal with a fixed reference value or warning threshold and produces an alarm signal sent to said control unit.

9. A radar device, according to claim 7, wherein, if said detector is connected between said intermediate frequency amplifier $f_{IF}$ and said central control unit or between said receiving antenna and said central control unit, said detector comprises a first line that receives respectively said intermediate frequency signal $f_{IF}$ from said intermediate frequency amplifier or said RF signal provided by said receiving antenna.

10. A radar device, according to claim 8 or 9, wherein said first and/or said second line comprises:

> - a pass-band filter centred on said FL frequency with RWB band;
> - a True Power Detector suitable to generate a signal proportional to the rms power of the output signal coming from said pass-band filter;
> - a low-pass filter exiting from said True Power Detector.

**11.** A radar device, according to claim 10, wherein said pass-band filter is equivalent to a couple of pass-band filters located at RF centred at the frequency $f_{tx} \pm f_L$ with RBW band, where $f_{tx}$ is the frequency of the transmitted tone given by:

$$f_{tx} = f_{RF} + n \cdot \Delta f, \quad n = 1 \cdots N$$

**12.** A radar device, according to claim 5, wherein said transmitted signal is selected from the group comprised of:

- a signal consisting of a series of tones of duration T with variation of stepped frequency of $\Delta f$ from one another, in case of radar system of the type Stepped Frequency Continous Wave;
- a signal with a carrier having a wave form with continuous frequency variation.
- a signal modulated according to the Frequency Hopping technique.

**13.** A radar device, according to claim 1 or 5, wherein said radar device is of the type SFCW or FMCW and is associated with at least one radar technique selected from the group comprised of:

- Syntethic Aperture Radar (SAR);
- Real Aperture Radar (RAR);
- differential interferometry.

**14.** A radar device, according to claim 5, mounted on a self-propelled vehicle, translating or rotating.

**15.** A radar device, according to claim 5, mounted on a carriage having said transmission antenna and said receiving antenna adjacent to each other and acting along directions substantially parallel, said carriage being slidable on a guide along a transversal direction with respect to said parallel directions.

## Fig.1

## Fig.2

Stand-by status — 2

System waiting input command

User command for starting acquisition

System scanning frequency band for transmission, by measuring the received received power P$_R$ — 4

3

Listen Before Talk phase

Radar system switches into command waiting status

Warning the user about the problem

P$_R$<Threshold — 7

NO    YES

A service is active in the band of interest and the systems in the Listen Before Talk Status

System starting transmission — 6

System checks the received power while from other devices transmitting in the same band — 8

Listen While Talking phase

System in stand by

YES

P$_R$<Threshold — 7'

9

Warning the user about the problem — 5'

An apparatus transmitting in the same band of the radar system is within the irradiated zone    NO

Interrupting the transmission and saving the data acquired up to the stopping instant — 10

end of acquisition

## Fig.3
### (prior art)

**54**

**50** **53** Local Oscillator **55** **65** **60** **40**

Frequency Synthesizer | $n \cdot \Delta f$ | COHO | ⊗ | $f_{IF}$ | $f_{IF} + n \cdot \Delta f$ | TX IF Amplifier | ⊗ | $f_{RF} + f_{IF} + n \cdot \Delta f$ | RF Power Amplifier | Antenna TX

**43** **51** **52** **57** **21**

**68** **56** **58** STALO **59** $f_{RF}$

PC

Control Unit | A/D | I Q | Phase Detector | $f_{IF} + n \cdot \Delta f$ | RX IF Amplifier | ⊗ | $f_{IF} + n \cdot \Delta f$ | RF LNA | Antenna RX

**42** **69** **67** **66** **65** **44** **64** **63** **61** **62** **20**

**41**

## Fig.4

**40**

Local Oscillator **55** **60** **16**

Frequency Synthesizer | $n \cdot \Delta f$ | COHO | ⊗ | $f_{IF}$ | $f_{IF} + n \cdot \Delta f$ | TX IF Amplifier | ⊗ | RF Power Amplifier | Switch | Antenna TX

**21**

$f_{RF}$

STALO | $f_{RF}$

**69** **68** **66**

PC

Control Unit | A/D | I Q | Phase Detector | $f_{IF} + n \cdot \Delta f$ | RX IF Amplifier | ⊗ | RF LNA | Antenna RX

**42** **44** **41** **20**

Detector

**30** **67**

## Fig.5

## Fig.6

**Fig.7**

30

80

| Comparator | LP Video | True Power Detector | IF/RF filter RBW |

Control Unit

Alarm signal

+

Alarm threshold

IF/RF RX

42   86   83   72   89

**Fig.8**

$BW_{IF} = BW_{RF}$

$\Delta f$

$f_{IF}$   $f$

$BW_{RF}$

$\Delta f$

$f_{RF}$   $f$

**Fig.9**

$BW_{RF}$

RBW   RBW

$f_{tx} - f_L$   $f_{tx}$   $f_{tx} + f_L$   $f$

**Fig.10**

Radar signal band

RBW

$f_L$   $f$

**European Patent Office**

**EUROPEAN SEARCH REPORT**

Application Number

EP 08 00 7626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 359 911 A (MESSERSCHMITT BOELKOW BLOHM [DE] DEUTSCHE AEROSPACE [DE]) 28 March 1990 (1990-03-28) * the whole document * ----- | 1-12 | INV. G01S7/02 ADD. G01S7/36 G01S13/02 G01S13/24 G01S13/90 |
| X | US 5 302 956 A (ASBURY JIMMIE R [US] ET AL) 12 April 1994 (1994-04-12) * column 16, lines 32-55 * ----- | 1-4 | |
| A | GB 2 299 909 A (COMMW OF AUSTRALIA [GB]) 16 October 1996 (1996-10-16) * page 1, lines 2-4 * * page 3, lines 1-4 * * page 5, lines 3-15 * * page 6, lines 8-14 * * page 7, lines 2-16 * ----- | 1-12 | |

TECHNICAL FIELDS SEARCHED (IPC)

G01S

The present search report has been drawn up for all claims

| Place of search | Date of completion of the search | Examiner |
|---|---|---|
| Munich | 9 July 2008 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 983 353 A1**

## ANNEX TO THE EUROPEAN SEARCH REPORT
## ON EUROPEAN PATENT APPLICATION NO.

EP 08 00 7626

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2008

| Patent document cited in search report | | Publication date | Patent family member(s) | | Publication date |
|---|---|---|---|---|---|
| EP 0359911 | A | 28-03-1990 | DE | 3830992 A1 | 22-03-1990 |
| | | | US | 4945360 A | 31-07-1990 |
| US 5302956 | A | 12-04-1994 | AT | 186124 T | 15-11-1999 |
| | | | AU | 672821 B2 | 17-10-1996 |
| | | | AU | 5003393 A | 15-03-1994 |
| | | | BR | 9306885 A | 08-12-1998 |
| | | | CA | 2141546 A1 | 03-03-1994 |
| | | | DE | 69326896 D1 | 02-12-1999 |
| | | | DE | 69326896 T2 | 15-06-2000 |
| | | | EP | 0655141 A1 | 31-05-1995 |
| | | | JP | 2945821 B2 | 06-09-1999 |
| | | | JP | 6167565 A | 14-06-1994 |
| | | | KR | 100254144 B1 | 15-04-2000 |
| | | | WO | 9404940 A1 | 03-03-1994 |
| GB 2299909 | A | 16-10-1996 | NONE | | |

EPO FORM P0459

For more details about this annex : see Official Journal of the European Patent Office, No. 12/82

15